# EUROPEAN PATENT APPLICATION

(11) **EP 3 845 921 A1**
(43) Date of publication of application: **07.07.2021**
(21) Application number: 19853855.5
(22) Date of filing: 22.08.2019
(51) Int. Cl.: G01S 5/14

(54) **POSITIONING SYSTEM, POSITIONING METHOD, AND RECORDING MEDIUM**

(30) Priority: 29.08.2018 JP 2018160680
(71) Applicant: NEC Corporation, 108-8001 Tokyo (JP)
(72) Inventor: AOYAMA, Akio, Tokyo 108-8001 (JP)
(74) Representative: MacDougall, Alan John Shaw
(86) International application number: PCT/JP2019/032732
(87) International publication number: WO 2020/045206

(57) **Abstract**

In order to derive the position of communication device even when it is difficult to derive the position of the communication device using GPS and radio waves in an allocated frequency band, this positioning system is provided with a reception processing unit for deriving second frequency band quality information, which is information representing the quality of second frequency band radio waves received from a second frequency band communicator which emits the second frequency band radio waves, which are radio waves in a second frequency band, being a frequency band that does not overlap a first frequency band allocated for radio communications performed by the communication device, and a deriving unit for deriving and outputting second frequency band position information, which is information representing the position of the communication device derived by means of the second frequency band quality information relating to each of three or more second frequency band communicators, wherein the position of at least the reception processing unit among the reception processing unit and the deriving unit lies within the communication device.

## Description

### [Technical Field]

The present invention relates to a method of deriving a position of a communication device.

### [Background Art]

A wireless communication terminal (hereinafter, referred to as a "terminal") such as a smartphone generally specifies a position of the terminal by using a GPS. Herein, the GPS is an abbreviation of Global Positioning System.

However, there is a case that a position of a terminal is desired to be acquired in a situation that the terminal cannot use the GPS, or in an environment that use of the GPS is difficult even when the GPS is usable. For example, the terminal may be within a tunnel or in a shadow of a building, and a GPS radio wave may not reach the terminal.

As a method in which the terminal can acquire a position thereof without using the GPS, a method employing a three-point positioning method by radio quality information relating to a radio wave to be received from three or more base stations relating to wireless communication to be performed by the terminal is known (see PTL 1). Herein, the radio quality information is, for example, at least either one of a received electric field strength and a propagation time relating to the radio wave to be received.

PTL 2 discloses a radio terminal in which detection of a radio link disconnection is performed, information relating to the radio link disconnection is stored, and information indicating storing the information relating to the radio link disconnection and information relating to a moving speed are notified to a radio network.

### [Citation List]

### [Patent Literature]

[PTL 1] Japanese Unexamined Patent Application Publication No. H10-239416
[PTL 2] Japanese Unexamined Patent Application Publication No. 2017-127015

### [Summary of Invention]

### [Technical Problem]

However, when a three-point positioning method is employed by using a radio wave in a frequency band in which a terminal performs wireless communication, there is a case that it is difficult to derive a position. Such a case is, for example, a case in which the radio wave in the frequency band from three or more base stations does not reach the terminal with a sufficient strength.

An object of the present invention is to provide a positioning system and the like capable of deriving a position of a communication device, even when it is difficult to use a GPS, and derive the position of the communication device by a radio wave in an allocated frequency band.

### [Solution to Problem]

A positioning system according to the present invention includes: a reception processing unit that derives second frequency band quality information being information representing quality of a second frequency band radio wave that is a radio wave in a second frequency band being a frequency band that does not overlap a first frequency band allocated to wireless communication to be performed by a communication device, and is received from a second frequency band communicator for transmitting the second frequency band radio wave; and a deriving unit that derives and outputs second frequency band position information being information representing a position of the communication device being derived from the second frequency band quality information relating to each of three or more of the second frequency band communicators. At least a position of the reception processing unit out of the reception processing unit and the deriving unit lies within the communication device.

### [Advantageous Effects of Invention]

A positioning system and the like according to the present invention are able to derive a position of a communication device, even when it is difficult to use a GPS, and derive the position of the communication device by a radio wave in an allocated frequency band.

### [Brief Description of Drawings]

[Fig. 1] Fig. 1 a conceptual diagram illustrating a configuration example of a positioning system according to a first example embodiment.
[Fig. 2] Fig. 2 is an image diagram illustrating an example of a positional relation among a communication device, the first frequency band base station, and the second frequency band base station.
[Fig. 3] Fig.3 is a conceptual diagram illustrating a first processing flow example of processing to be performed by a processing unit of a positioning device according to the first example embodiment.
[Fig. 4] Fig. 4 is a conceptual diagram illustrating a first processing flow example of processing to be performed by a processing unit of a communication device according to the first example embodiment.
[Fig. 5] Fig. 5 is a conceptual diagram illustrating processing of replacing processing of S104 to S109 illustrated in Fig. 3.
[Fig. 6] Fig. 6 is a conceptual diagram illustrating a second processing flow example of processing to be performed by the processing unit of the communication device according to the first example embodiment.
[Fig. 7] Fig. 7 is a conceptual diagram illustrating a configuration example of a positioning system according to a second example embodiment.
[Fig. 8] Fig. 8 is a conceptual diagram illustrating a processing flow example of processing to be performed by a processing unit of a communication device according to the second example embodiment.
[Fig. 9] Fig. 9 is a conceptual diagram illustrating a processing flow example of processing to be performed by a processing unit of a positioning device according to a third example embodiment.
[Fig. 10] Fig. 10 is a conceptual diagram illustrating a processing flow example of processing to be performed by a processing unit of a communication device according to the third example embodiment.
[Fig. 11] Fig. 11 is a conceptual diagram illustrating a hardware configuration example of an information processing device capable of achieving a positioning device and a communication device according to each of the example embodiments.
[Fig. 12] Fig. 12 is a block diagram illustrating a minimum configuration of a positioning system according to an example embodiment.

### [Example Embodiment]

A positioning system according to any of example embodiments performs derivation of a position of a communication device by a second frequency band radio wave being a radio wave other than a first frequency band radio wave being a radio wave in a frequency band for use in wireless communication by the communication device. Therefore, the positioning system is able to derive a position of the communication device, even when it is difficult to derive the position of the communication device by the first frequency band radio wave.

### <First Example Embodiment>

A first example embodiment is an example embodiment relating to a positioning system for deriving a position of a communication device by an external positioning device.

### [Configuration and Operation]

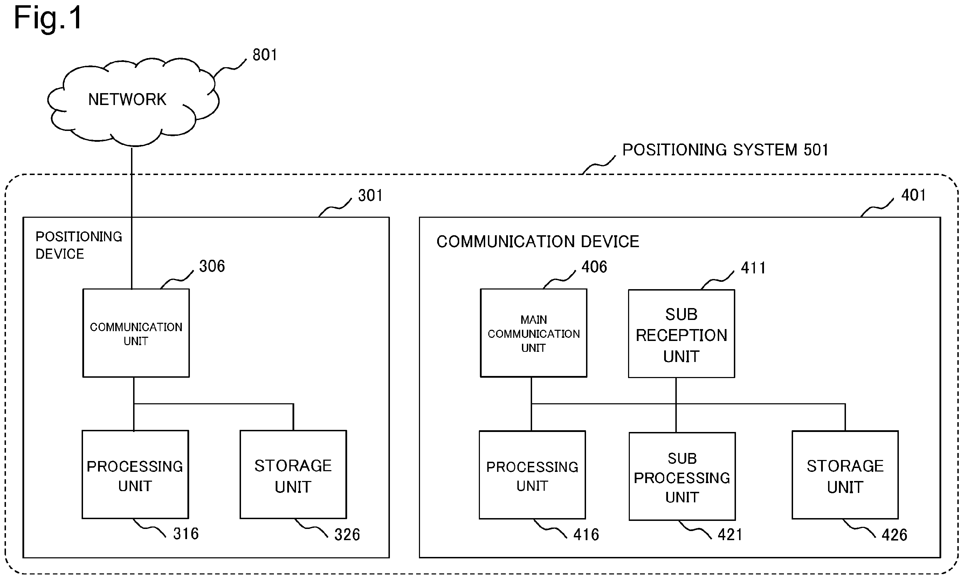

Fig. 1 is a conceptual diagram illustrating a configuration of a positioning system 501, which is an example of the positioning system according to the first example embodiment.

The positioning system 501 includes a positioning device 301 and a communication device 401.

The positioning device 301 is a device for deriving a position of the communication device 401. The positioning device 301 is connected to a network 801. A connection method thereof is optional.

The positioning device 301 includes a communication unit 306, a processing unit 316, and a storage unit 326.

The processing unit 316 causes the communication unit 306 to transmit setting information to the communication device 401 at the time of deriving a position of the communication device 401. The setting information is information for causing the communication device 401 to receive a second frequency radio wave being a radio wave in a second frequency band. Herein, the second frequency band is a frequency band other than a first frequency band, and which does not overlap the first frequency band to be described next. The first frequency band is a frequency band allocated to the communication device 401 for wireless communication (transmission and reception) to be performed by the communication device 401. The communication device 401 performs communication with equipment and the like connected to the network 801 via a first frequency band base station being a base station to which the first frequency band is allocated for wireless communication by a first frequency band radio wave being a radio wave in the first frequency band.

The setting information includes, for example, information representing the second frequency band.

The second frequency band is a frequency band in which a second frequency band communication device being a communication device to which the second frequency band is allocated for wireless communication performs communication with equipment and the like connected to the network 801 via a second frequency band base station. The second base station is a base station to which the second frequency band is allocated for wireless communication. The communication device 401 is not the second frequency band communication device.

The setting information is stored in advance in the storage unit 326.

The processing unit 316 waits, from the communication device 401, transmission of second frequency band radio quality information being radio quality information in the second frequency band, regarding three or more different second frequency band base stations. The second frequency band radio quality information is radio quality information regarding the second frequency band radio wave from the second frequency band base station from which the communication device 401 can receive the second frequency band radio wave. The radio quality information is information representing quality of a radio wave that reaches the communication device 401. The radio quality information includes, for example, at least either one of a received electric field strength and a propagation time regarding a radio wave that reaches the communication device 401 from a certain base station. The propagation time is a propagation time of the second frequency radio wave between the communication device 401 and a certain second frequency band base station. The propagation time is, for example, a difference between a transmission time of the second frequency band radio wave in the base station that transmits the second frequency band radio wave, and a reception time of the second frequency band radio wave in the communication device 401.

The radio quality information further includes an identifier (ID) representing a base station that transmits the radio wave. The ID is, for example, a cell ID relating to the base station.

When receiving, from the communication device 401, transmission of the second frequency band radio quality information regarding three or more second frequency band base stations, the processing unit 316 derives, from pieces of the second frequency band radio quality, position information representing a position of the communication device 401. The processing unit 316 performs the derivation by the three-point positioning method described in the section of the Background Art.

In the following description, a position derived from the second frequency band radio quality information is referred to as a "second frequency band position".

In the foregoing description, a case is described in which the processing unit 316 derives a position of the communication device 401 only from second frequency band radio quality information relating a second frequency band base station. Alternatively, the processing unit 316 may derive a position of the communication device 401 by using in combination first frequency band radio quality information being the radio quality information of the first frequency band radio wave, which is transmitted by the communication device 401 and received from the first frequency band base station.

In this case, the processing unit 316 causes the communication device 401 to transmit, to the positioning device 301 via the communication unit 306, the first frequency band radio quality information regarding the three or more first frequency band base stations. Then, the processing unit 316 derives, from the pieces of the first frequency band radio quality information, a position of the communication device 401 by the above-described three-point positioning method. In the following description, a position derived from the first frequency band radio quality information is referred to as a "first frequency band position".

Then, the processing unit 316 derives a third position from the first frequency band position and the second frequency band position. The third position is, for example, an intermediate position between the first frequency band position and the second frequency band position. Then, the processing unit 316 sets the third position as a position of the communication device 401.

The communication unit 306 performs communication with predetermined equipment connected to the network 801 in response to an instruction from the processing unit 316. The equipment includes the communication device 401.

The storage unit 326 stores in advance a program and information necessary for the operation to be performed by the processing unit 316 and the communication unit 306. The information includes the setting information.

The storage unit 326 further stores information instructed by the communication unit 306 or the processing unit 316.

The storage unit 326 further reads information instructed by the communication unit 306 or the processing unit 316, and transmits the information to a designated one out of the communication unit 306 and the processing unit 316.

The communication device 401 is, for example, a communication terminal. The communication terminal is, for example, a mobile terminal such as a smartphone.

The communication device 401 includes a main communication unit 406, a sub reception unit 411, a processing unit 416, a sub processing unit 421, and a storage unit 426. The main communication unit 406, the sub reception unit 411, the processing unit 416, the sub processing unit 421, and the storage unit 426 are, for example, installed in one housing.

The processing unit 416 causes the main communication unit 406 to perform communication by the above-described first frequency band radio wave with predetermined equipment connected to the network 801 via the above-described first frequency band base station. The equipment includes the positioning device 301.

When the setting information is transmitted from the positioning device 301, the processing unit 416 causes the storage unit 426 to store the setting information. Then, the processing unit 416 causes the sub processing unit 421 to acquire the second frequency band radio quality information based on the setting information.

The sub processing unit 421 may have a hardware configuration common to the processing unit 416.

When the second frequency band radio quality information is stored in the storage unit 426 by the sub processing unit 421, the processing unit 416 causes the main communication unit 406 to transmit the second frequency band radio quality information to the positioning device 301.

When being instructed to transmit the first frequency band radio quality information from the positioning device 301, the processing unit 416 tries to acquire the first frequency band radio quality information regarding a first frequency band radio wave received by the main communication unit 406. At this occasion, when a received electric field strength is included in the radio quality information, the processing unit 416 derives the received electric field strength, for example, by a signal level of an electric signal detected by the main communication unit 406 after reception. When the propagation time is included in the radio quality information, the processing unit 416 derives the propagation time, for example, by subtracting the transmission time from a reception time of the first frequency band radio wave in the communication device 401. Herein, the transmission time is a transmission time of the first frequency band radio wave in the frequency band base station, which is included in the first frequency band radio wave. Alternatively, the processing unit 416 may derive the propagation time by a well-known round trip method.

The processing unit 416 causes the storage unit 426 to store the derived first frequency band radio quality information. Then, the processing unit 416 causes the main communication unit 406 to transmit the first frequency band radio quality information to the positioning device 301.

The main communication unit 406 performs communication with predetermined equipment connected to the network 801 via the first frequency band base station by the first frequency band radio wave in response to an instruction from the processing unit 416. The equipment includes the positioning device 301.

The sub reception unit 411 receives the second frequency band radio wave that reaches from the second frequency band base station in response to an instruction from the sub processing unit 421. Then, the sub reception unit 411 transmits the received information to the sub processing unit 421. The sub reception unit 411 does not transmit the second frequency band radio wave.

When the above-described setting information is stored in the storage unit 426 by the processing unit 416, the sub processing unit 421 causes the sub reception unit 411 to receive the second frequency band radio wave, based on the setting information. Then, the sub processing unit 421 tries to acquire the second frequency band radio quality information by the second frequency band radio wave received by the sub reception unit 411.

When the second frequency band radio quality information is acquired, the sub processing unit 421 causes the storage unit 426 to store the acquired second frequency band radio quality information.

At this occasion, when the received electric field strength is included in the radio quality information, the sub processing unit 421 derives a received electric field strength of the received second frequency band radio wave, for example, by a signal level of an electric signal by the sub reception unit 411 after reception. When the propagation time is included in the radio quality information, the sub processing unit 421 derives a propagation time of the second frequency band radio wave, for example, by subtracting a transmission time of the second frequency band radio wave, which is included in the second frequency band radio wave, from a reception time of the second frequency band radio wave. Alternatively, the sub processing unit 421 may derive the propagation time by a well-known round trip method.

Then, the sub processing unit 421 causes the processing unit 416 and the main communication unit 406 to transmit the derived second frequency band radio quality information to the positioning device 301.

The storage unit 426 stores in advance a program and information for causing each of the main communication unit 406, the processing unit 416, the sub reception unit 411, and the sub processing unit 421 to perform the above-described operation. The storage unit 426 further stores information instructed from each of the main communication unit 406, the processing unit 416, the sub reception unit 411, and the sub processing unit 421. The storage unit 426 further reads information instructed from each of the main communication unit 406, the processing unit 416, the sub reception unit 411, and the sub processing unit 421, and transmits the information to a designated one out of the main communication unit 406, the processing unit 416, the sub reception unit 411, and the sub processing unit 421.

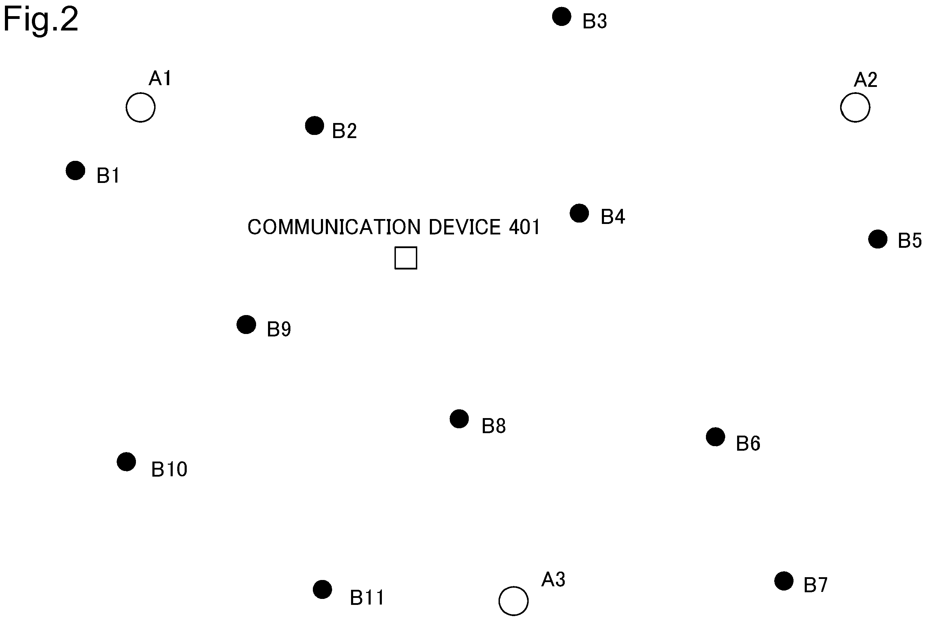

Fig. 2 is an image diagram illustrating a layout example of a communication device, the first frequency band base station, and the second frequency band base station.

White dots illustrated in Fig. 2 indicate first frequency band base stations. Black dots indicate second frequency band base stations.

In Fig. 2, the first frequency band base stations located near the communication device 401 are three base stations, namely, first frequency band base stations A1 to A3. Each of the first frequency band base stations A1 to A3 is connected to the network 801 illustrated in Fig. 1.

It is assumed that the communication device 401 is able to receive the first frequency band radio wave emitted from at least one of the first frequency band base stations A1 to A3. Further, it is assumed that the first frequency band radio wave emitted from the communication device 401 is receivable by the associated first frequency band base station. In this case, the communication device 401 is able to perform communication with equipment connected to the network illustrated in Fig. 1 via the first frequency band base station. The equipment includes the positioning device 301.

Then, it is assumed that the communication device 401 is also able to receive the first frequency band radio wave emitted from any of the first frequency band base stations A1 to A3. In this case, the communication device 401 is able to acquire the first frequency band radio quality information regarding the first frequency band radio wave emitted from the first frequency band base station.

It is assumed that eleven second frequency band base stations, namely, second frequency band base stations B1 to B11, are present around the communication device 401. It is assumed that the communication device 401 is able to receive the second frequency band radio wave emitted from each of the second frequency band base stations B2, B4, B8, and B9 nearby. In this case, the communication device 401 is able to acquire the second frequency band radio quality information regarding the second frequency band radio wave emitted from each of the second frequency band base stations B2, B4, B8, and B9.

Herein, it is assumed that the communication device 401 cannot receive a first frequency band radio wave from any of the first frequency band base stations A1 to A3, regardless of the above. In this case, the positioning device 301 illustrated in Fig. 1 cannot derive a position of the communication device 401 by the three-point positioning method from the first frequency band radio wave emitted from the first frequency band base stations A1 to A3. Even in this case, the positioning device 301 can derive a position of the communication device 401 by the three-point positioning method, as far as the communication device 401 is able to receive a second frequency band radio wave emitted from three or more second frequency band base stations out of the second frequency band base stations B2, B4, B8, and B9.

### [Processing Flow Example]

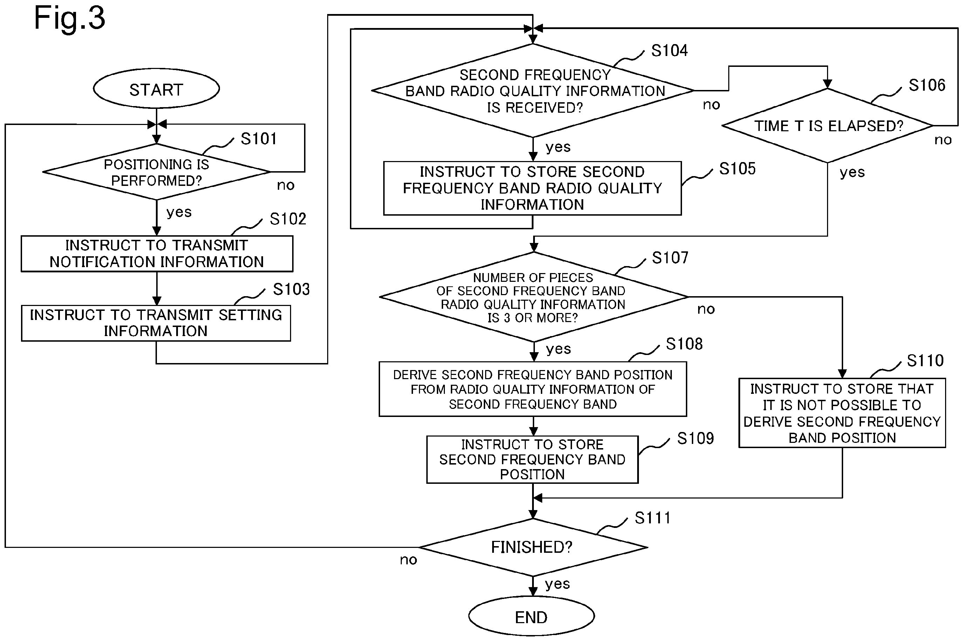

Fig. 3 is a conceptual diagram illustrating a processing flow example of processing to be performed by the processing unit 316 of the positioning device 301 illustrated in Fig. 1.

The processing unit 316 starts the processing illustrated in Fig. 3 by an external input of starting information, for example.

Then, as processing of S101, the processing unit 316 determines whether positioning of the communication device 401 is performed. The processing unit 316 performs the determination, for example, by determining whether a timing that is set in advance for performing positioning has reached. Herein, it is assumed that the processing unit 316 is in an environment in which a clock is usable.

The processing unit 316 performs processing of S102, when a determination result by the processing of S101 is yes.

On the other hand, the processing unit 316 performs the processing of S101 again, when the determination result by the processing of S101 is no.

When processing of S102 is performed, as the same processing, the processing unit 316 causes the communication unit 306 to transmit notification information to the communication device 401. The notification information is information of notifying the communication device 401 of starting positioning the communication device 401.

Then, as processing of S103, the processing unit 316 causes the communication unit 306 to transmit the above-described setting information to the communication device 401. The setting information is information for causing the communication device 401 to receive the second frequency band radio wave, as described above.

Then, as processing of S104, the processing unit 316 determines whether the above-described second frequency band radio quality information is newly received. The second frequency band radio quality information being a determination target is limited to the one which has not yet undergone processing of S105.

The processing unit 316 performs the processing of S105, when a determination result by the processing of S104 is yes.

On the other hand, the processing unit 316 performs processing of S106, when the determination result by the processing of S104 is no.

When the processing of S105 is performed, as the same processing, the processing unit 316 causes the storage unit 326 illustrated in Fig. 1 to store second frequency band radio quality information, which is determined to be received by processing of S104. Then, the processing unit 316 performs the processing of S104 again.

When the processing of S106 is performed, as the same processing, the processing unit 316 determines whether a time T has elapsed from a time when the processing of S103 finished. Herein, it is assumed that the processing unit 316 is in an environment in which a timer is usable. Further, the time T is a time that is determined in advance for the processing of S106. The processing of S106 is performed for the purpose of waiting reception of second frequency band radio quality information from the communication device 401 by the time T.

The processing unit 316 performs processing of S107, when a determination result by the processing of S106 is yes.

On the other hand, the processing unit 316 performs the processing of S104 again, when the determination result by the processing of S106 is no.

When processing of S107 is performed, as the same processing, the processing unit 316 determines whether the number of the second frequency band base stations relating to the second frequency band radio quality information stored in the storage unit 326 is three or more. Herein, it is assumed that the number of the second frequency band base stations coincides with the number of pieces of the second frequency band radio quality information.

The processing unit 316 performs processing of S108, when a determination result by the processing of S107 is yes.

On the other hand, the processing unit 316 performs processing of S110, when the determination result by the processing of S107 is no.

When processing of S108 is performed, as the same processing, the processing unit 316 derives, from the second frequency band radio quality information relating to the three or more second frequency band base stations stored in the storage unit 326, the second frequency band position of the communication device 401 by the three-point positioning method.

Then, the processing unit 316 causes the storage unit 326 to store position information representing the second frequency band position derived by the processing of S108. The second frequency band position stored in the storage unit 326 is output to external equipment, for example, in response to a request to the positioning device 301 by the external equipment via the network 801.

When processing of S110 is performed, as the same processing, the processing unit 316 causes the storage unit 326 to store information indicating that it is not possible to derive a second frequency band position.

Then, as processing of S111, the processing unit 316 determines whether the processing illustrated in Fig. 3 is finished. The processing unit 316 performs the determination, for example, by determining whether an external input of finishing information is present.

The processing unit 316 finishes the processing illustrated in Fig. 3, when a determination result by the processing of S111 is yes.

On the other hand, the processing unit 316 performs the processing of S101 again, when the determination result by the processing of S111 is no.

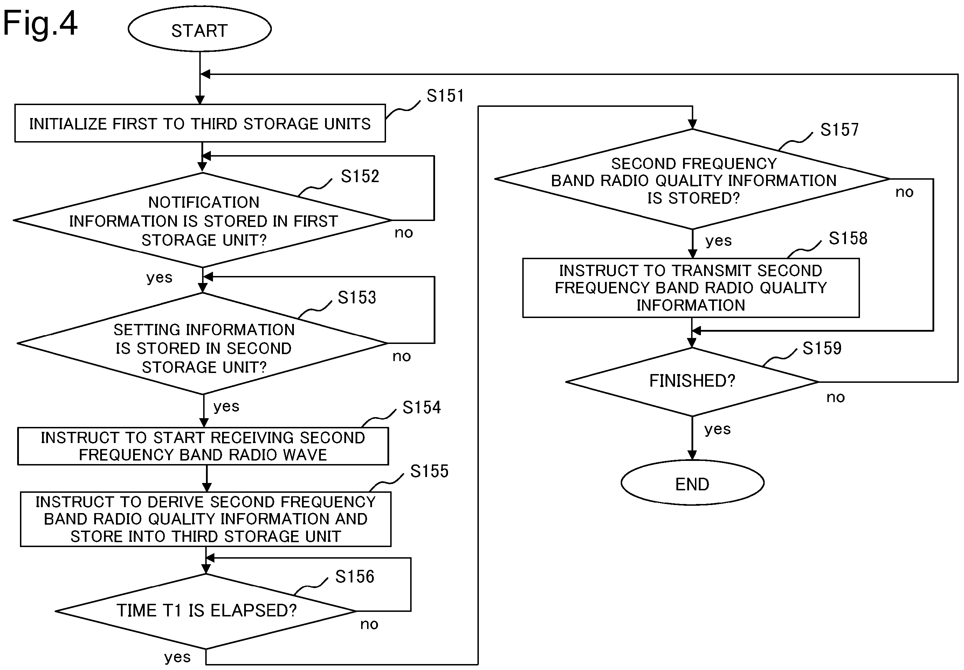

Fig. 4 is a conceptual diagram illustrating a processing flow example of processing to be performed by the processing unit 416 of the communication device 401 illustrated in Fig. 1.

The processing unit 416 starts the processing illustrated in Fig. 4 by an external input of starting information, for example.

Then, as processing of S151, the processing unit 416 performs initialization of making storage contents of first to third storage units in the storage unit 426 illustrated in Fig. 1 empty. The first to third storage units are each a storage unit represented by an address, for example, and provided for storing specific information in the storage unit 426.

The first storage unit is a storage unit for storing the above-described notification information (see the processing of S102 in Fig. 3), which is transmitted to the communication device 401 by the positioning device 301. The second storage unit is a storage unit for storing the above-described setting information (see the processing of S103 in Fig. 3), which is transmitted to the communication device 401 by the positioning device 301. The third storage unit is a storage unit for storing second frequency band radio quality information acquired by the sub processing unit 421.

Next, as processing of S152, the processing unit 416 determines whether the notification information, of which transmission is received from the positioning device 301 by the main communication unit 406 illustrated in Fig. 1, is stored in the first storage unit. Herein, when the main communication unit 406 receives the notification information, it is assumed that storing the notification information in the first storage unit is determined in advance. Further, it is assumed that the processing unit 416 sequentially monitors whether the notification information is stored in the first storage unit.

The processing unit 416 performs processing of S153, when a determination result by the processing of S152 is yes.

On the other hand, the processing unit 416 performs the processing of S152 again, when the determination result by the processing of S152 is no.

When processing of S153 is performed, as the same processing, the processing unit 416 determines whether the setting information is stored in the second storage unit. Herein, when the main communication unit 406 receives the setting information, it is assumed that storing the setting information in the second storage unit is determined in advance. Further, it is assumed that the processing unit 416 sequentially monitors whether the setting information is stored in the second storage unit.

The processing unit 416 performs processing of S154, when a determination result by the processing of S153 is yes.

On the other hand, the processing unit 416 performs the processing of S153 again, when the determination result by the processing of S153 is no.

When processing of S154 is performed, as the same processing, the processing unit 416 instructs the sub processing unit 421 illustrated in Fig. 1 to receive a second frequency band radio wave, based on the setting information stored in the second storage unit.

The sub processing unit 421 that has received the instruction causes the sub reception unit 411 to start receiving a second frequency band radio wave.

Then, as processing of S155, the processing unit 416 instructs the sub processing unit 421 to try to acquire, from the received second frequency band radio wave, the second frequency band radio quality information, and store the acquired second frequency band radio quality information into the third storage unit.

The sub processing unit 421 that has received the instruction tries to acquire, from the second frequency band radio wave received by the sub reception unit 411, the second frequency band radio quality information. When the second frequency band radio quality information is acquired, the sub processing unit 421 causes the storage unit 426 to store the second frequency band radio quality information into the third storage unit. The sub processing unit 421 performs the acquisition and the storing by the number of times equal to the number of the second frequency band base stations that have transmitted the received second frequency band radio wave.

Next, as processing of S156, the processing unit 416 determines whether a time T1 has elapsed since the processing of S155 finished. Herein, it is assumed that the processing unit 416 is in an environment in which a timer is usable. Further, the time T1 is a time that is determined in advance for the processing of S156. The processing of S156 is performed for the purpose of waiting derivation of the second frequency band radio quality information and storing into the third storage unit by the sub processing unit 421 by the time T1.

The processing unit 416 performs processing of S157, when a determination result by the processing of S156 is yes.

On the other hand, the processing unit 416 performs the processing of S156 again, when the determination result by the processing of S156 is no.

When the processing of S157 is performed, as the same processing, the processing unit 416 determines whether the second frequency band radio quality information is stored in the third storage unit. Herein, it is assumed that the processing unit 416 sequentially monitors whether the second frequency band radio quality information is stored in the third storage unit.

The processing unit 416 performs processing of S158, when a determination result by the processing of S157 is yes.

On the other hand, the processing unit 416 performs processing of S159, when the determination result by the processing of S157 is no.

When the processing of S158 is performed, as the same processing, the processing unit 416 causes the main communication unit 406 to transmit, to the positioning unit 301, the second frequency band radio quality information stored in the third storage unit.

Then, as the processing of S159, the processing unit 416 determines whether the processing illustrated in Fig. 4 is finished. The processing unit 416 performs the determination, for example, by determining whether an external input of finishing information is present.

The processing unit 416 finishes the processing illustrated in Fig. 4, when a determination result by the processing of S159 is yes.

On the other hand, the processing unit 416 performs the processing of S151 again, when the determination result by the processing of S159 is no.

As described above, the positioning system 501 may derive a position of the communication device 401 by using first frequency band radio quality information in addition to second frequency band radio quality information. In the following, a processing flow example is described in a case where a position of the communication device 401 is derived by using first frequency band radio quality information in addition to second frequency band radio quality information.

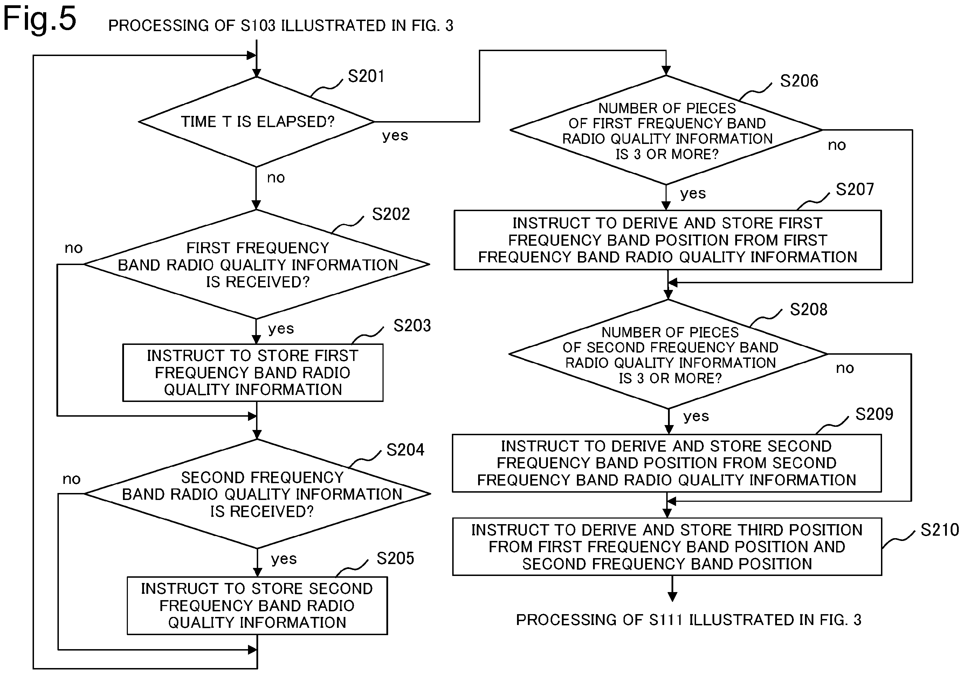

A second processing flow example of processing to be performed by the processing unit 316 of the positioning device 301 is an example in which processing of S104 to S109 is replaced by processing illustrated in Fig. 5 in the processing flow example illustrated in Fig. 3.

Fig. 5 is a conceptual diagram illustrating processing of replacing the processing of S104 to S109 illustrated in Fig. 3.

Succeeding to the processing of S103 illustrated in Fig. 3, as processing of S201, the processing unit 316 determines whether a time T has elapsed from a time when the processing of S103 finished. Herein, it is assumed that the processing unit 316 is in an environment in which a timer is usable. Further, the time T is a time that is determined in advance for the processing of S201. The processing of S106 is performed for the purpose of waiting reception of first frequency band radio quality information or second frequency band radio quality information from the communication device 401 by the time T.

The processing unit 316 performs processing of S206, when a determination result by the processing of S201 is yes.

On the other hand, the processing unit 316 performs processing of S202, when the determination result by the processing of S201 is no.

When the processing of S202 is performed, as the same processing, the processing unit 316 determines whether the above-described first frequency band radio quality information is received from the communication device 401.

The processing unit 316 performs processing of S203, when a determination result by the processing of S202 is yes.

On the other hand, the processing unit 316 performs processing of S204, when the determination result by the processing of S202 is no.

When the processing of S203 is performed, as the same processing, the processing unit 316 causes the storage unit 326 illustrated in Fig. 1 to store first frequency band radio quality information, which is determined to be received by the processing of S202. Then, the processing unit 316 performs processing of S204.

When the processing of S204 is performed, as the same processing, the processing unit 316 determines whether the above-described second frequency band radio quality information is received from the communication device 401.

The processing unit 316 performs processing of S205, when a determination result by the processing of S204 is yes.

On the other hand, the processing unit 316 performs the processing of S201 again, when the determination result by the processing of S204 is no.

When the processing of S205 is performed, as the same processing, the processing unit 316 causes the storage unit 326 illustrated in Fig. 1 to store second frequency band radio quality information, which is determined to be received by the processing of S204. Then, the processing unit 316 performs the processing of S204 again.

When the processing of S206 is performed, as the same processing, the processing unit 316 determines whether the number of first radio quality base stations relating to the first frequency band radio quality information stored in the storage unit 326 is three or more. Herein, it is assumed that the number of the first frequency band base stations coincides with the number of pieces of the first frequency band radio quality information.

The processing unit 316 performs processing of S207, when a determination result by the processing of S206 is yes.

On the other hand, the processing unit 316 performs processing of S208, when the determination result by the processing of S206 is no.

When the processing of S207 is performed, as the same processing, the processing unit 316 derives, from the first frequency band radio quality information relating to the three or more first frequency band base stations stored in the storage unit 326, the first frequency band position of the communication device 401 by the three-point positioning method. Then, the processing unit 316 causes the storage unit 326 to store position information representing the derived first frequency band position.

When the processing of S208 is performed, as the same processing, the processing unit 316 determines whether the number of second radio quality base stations relating to the second frequency band radio quality information stored in the storage unit 326 is three or more. Herein, it is assumed that the number of the second frequency band base stations coincides with the number of pieces of the second frequency band radio quality information.

The processing unit 316 performs processing of S209, when a determination result by the processing of S208 is yes.

On the other hand, the processing unit 316 performs processing of S210, when the determination result by the processing of S208 is no.

When processing of S209 is performed, as the same processing, the processing unit 316 derives, from the second frequency band radio quality information relating to the three or more second frequency band base stations stored in the storage unit 326, the second frequency band position of the communication device 401 by the three-point positioning method. Then, the processing unit 316 causes the storage unit 326 to store position information representing the derived second frequency band position.

When the processing of S210 is performed, as the same processing, the processing unit 316 derives the third position from the first frequency band position and the second frequency band position stored in the storage unit 326, and causes the storage unit 326 to store position information representing the third position. The processing unit 316 performs the derivation, for example, by setting the third position as an intermediate position between the first frequency position and the second frequency position.

At the time of the processing of S210, when either one of the first frequency band position and the second frequency band position is not stored in the storage unit 326, the processing unit 316 sets the other of these positions as the third position.

When neither the first frequency band position nor the second frequency band position is stored in the storage unit 326, the processing unit 316 does not derive the third position. Then, the processing unit 316 causes the storage unit 326 to store information indicating that the third position is not derived, for example.

Then, the processing unit 316 performs the processing of S111 illustrated in Fig. 3.

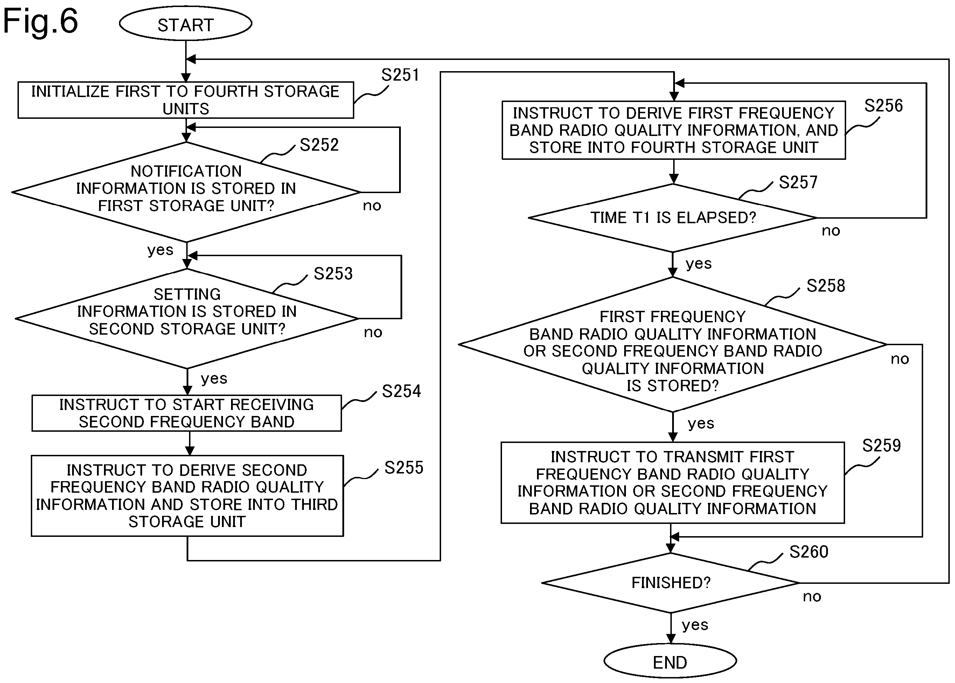

Fig. 6 is a conceptual diagram illustrating a second processing flow example of processing to be performed by the processing unit 416 of the communication device 401 illustrated in Fig. 1.

The processing unit 416 starts the processing illustrated in Fig. 6 by an external input of starting information, for example.

As processing of S251, the processing unit 416 performs initialization of making storage contents of first to fourth storage units in the storage unit 426 illustrated in Fig. 1 empty. The first to fourth storage units are each a storage unit represented by an address, for example, and provided for storing specific information in the storage unit 426.

The first storage unit is a storage unit for storing the above-described notification information (see the processing of S102 in Fig. 3), which is transmitted to the communication device 401 by the positioning device 301. The second storage unit is a storage unit for storing the above-described setting information (see the processing of S103 in Fig. 3), which is transmitted to the communication device 401 by the positioning device 301. The third storage unit is a storage unit for storing second frequency band radio quality information acquired by the sub processing unit 421. The fourth storage unit is a storage unit for storing the first frequency band radio quality information acquired by the processing unit 416.

Next, as processing of S252, the processing unit 416 determines whether the notification information received from the positioning device 301 by the main communication unit 406 illustrated in Fig. 1 is stored in the first storage unit. Herein, when the main communication unit 406 receives the notification information, it is assumed that storing the notification information in the first storage unit is determined in advance. Further, it is assumed that the processing unit 416 sequentially monitors whether the notification information is stored in the first storage unit.

The processing unit 416 performs processing of S253, when a determination result by the processing of S252 is yes.

On the other hand, the processing unit 416 performs the processing of S252 again, when the determination result by the processing of S252 is no.

When processing of S253 is performed, as the same processing, the processing unit 416 determines whether the setting information is stored in the second storage unit. Herein, when the main communication unit 406 receives the setting information, it is assumed that storing the setting information in the second storage unit is determined in advance. Further, it is assumed that the processing unit 416 sequentially monitors whether the setting information is stored in the second storage unit.

The processing unit 416 performs processing of S254, when a determination result by the processing of S253 is yes.

On the other hand, the processing unit 416 performs the processing of S253 again, when the determination result by the processing of S253 is no.

When processing of S254 is performed, as the same processing, the processing unit 416 instructs the sub processing unit 421 illustrated in Fig. 1 to receive a second frequency band radio wave by the sub reception unit 411, based on the setting information stored in the second storage unit.

The sub processing unit 421 that has received the instruction causes the sub reception unit 411 to receive a second frequency band radio wave.

Then, as processing of S255, the processing unit 416 instructs the sub processing unit 421 to try to acquire, from the second frequency band radio wave received by the sub reception unit 411, the second frequency band radio quality information, and store the acquired second frequency band radio quality information into the third storage unit.

The sub processing unit 421 that has received the instruction tries to acquire, from the received second frequency band radio wave, the second frequency band radio quality information. When the second frequency band radio quality information is acquired, the sub processing unit 421 stores the second frequency band radio quality information into the third storage unit. The sub processing unit 421 performs the acquisition and the storing by the number of times equal to the number of the second frequency band base stations that have transmitted the received second frequency band radio wave.

Then, as processing of S256, the processing unit 416 tries to acquire, from the first frequency band radio wave received by the main communication unit 406, the first frequency band radio quality information. When the first frequency band radio quality information is acquired, the processing unit 416 stores the first frequency band radio quality information into the fourth storage unit. The processing unit 416 performs the acquisition and the storing by the number of times equal to the number of the first frequency band base stations that have transmitted the received first frequency band radio wave.

Next, as processing of S257, the processing unit 416 determines whether a time T1 has elapsed since the processing of S255 finished. Herein, it is assumed that the processing unit 416 is in an environment in which a timer is usable. Further, the time T1 is a time that is determined in advance for the processing of S257. The processing of S257 is performed for the purpose of waiting storing of the second frequency band radio quality information into the third storage unit by the sub processing unit 421 by the time T1. The processing of S257 is also performed for the purpose of acquisition of the first frequency band radio quality information and storing into the fourth storage unit by the processing unit 416 by the time T1.

The processing unit 416 performs processing of S258, when a determination result by the processing of S257 is yes.

On the other hand, the processing unit 416 performs the processing of S256 again, when the determination result by the processing of S257 is no.

When processing of S258 is performed, as the same processing, the processing unit 416 at least determines whether the second frequency band radio quality information is stored in the third storage unit, or the first frequency band radio quality information is stored in the fourth storage unit. Herein, it is assumed that the processing unit 416 sequentially monitors whether the second frequency band radio quality information is stored in the third storage unit, and whether the first frequency band radio quality information is stored in the fourth storage unit.

The processing unit 416 performs processing of S259, when a determination result by the processing of S258 is yes.

On the other hand, the processing unit 416 performs processing of S260, when the determination result by the processing of S258 is no.

When the processing of S259 is performed, as the same processing, the processing unit 416 causes the main communication unit 406 to transmit, to the positioning unit 301, the second frequency band radio quality information stored in the third storage unit, and the first frequency band radio quality information stored in the fourth storage unit.

Then, as the processing of S260, the processing unit 416 determines whether the processing illustrated in Fig. 6 is finished. The processing unit 416 performs the determination, for example, by determining whether an external input of finishing information is present.

The processing unit 416 finishes the processing illustrated in Fig. 6, when a determination result by the processing of S260 is yes.

On the other hand, the processing unit 416 performs the processing of S251 again, when the determination result by the processing of S260 is no.

### [Advantageous Effect]

A positioning system according to the first example embodiment performs derivation of a position of a communication device by a second frequency band radio wave being a radio wave other than a first frequency band radio wave being a radio wave in a frequency band for use in wireless communication by the communication device. Therefore, the positioning system is able to derive a position of the communication device, even when it is difficult to derive the position of the communication device by the first frequency band radio wave.

There is a case that the positioning system derives a position (third position) of the communication device from a position (second frequency band position) derived by the second frequency band radio wave, and a position (first frequency band position) derived by the first frequency band radio wave. In this case, an error included in the second frequency band position and an error included in the first frequency band position can be absorbed at the third position. Therefore, the positioning system is able to improve derivation precision on a position of the communication device.

### <Second Example Embodiment>

A second example embodiment is an example embodiment relating to a communication system for deriving a position of a communication device by the communication device itself. It is assumed that description on each term that starts with a first frequency band or a second frequency band in description of the second example embodiment is the same as in the first example embodiment. However, when description on these terms is inconsistent between the first example embodiment and the second example embodiment, description in the second example embodiment is preferentially used.

### [Configuration and Operation]

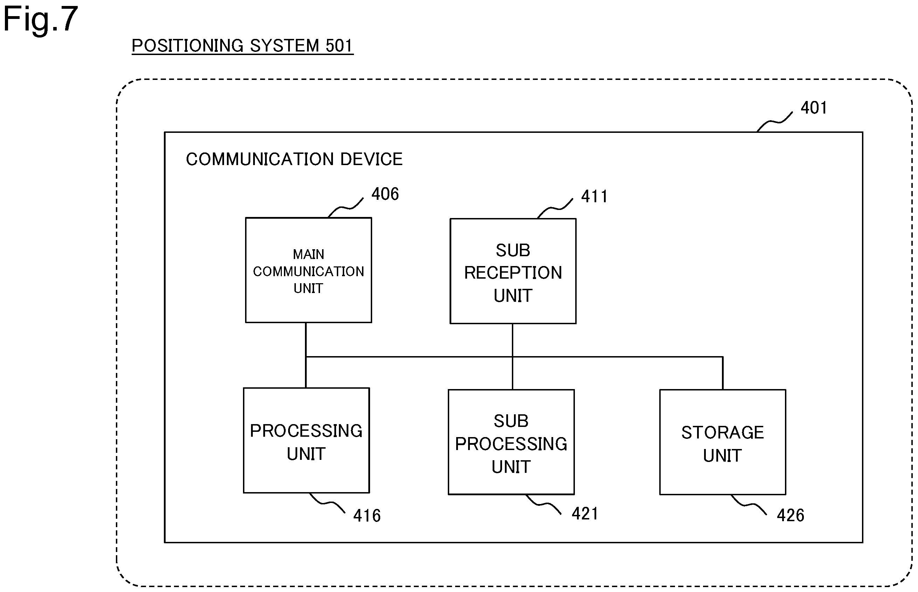

Fig. 7 is a conceptual diagram illustrating a configuration of a positioning system 501, which is an example of a positioning system according to the second example embodiment.

The positioning system 501 includes a communication device 401.

The communication device 401 is, for example, a communication terminal. The communication terminal is, for example, a mobile terminal such as a smartphone.

The communication device 401 includes a main communication unit 406, a sub reception unit 411, a processing unit 416, a sub processing unit 421, and a storage unit 426.

The processing unit 416 causes the main communication unit 406 to perform wireless communication using a first frequency band with predetermined equipment connected to a network 801 via a first frequency band base station. The first frequency band is a frequency band in which the communication device 401 to which the first frequency band is allocated as a frequency for use in wireless communication performs communication with equipment and the like connected to the network 801 via the first frequency band base station. The first frequency band base station is a base station in which the first frequency band is allocated as a frequency for use in wireless communication.

When positioning of the communication device 401 is performed, the processing unit 416 causes the sub processing unit 421 to acquire the second frequency band radio quality information based on setting information stored in advance in the storage unit 426. Description on the second frequency band radio quality information is as described in the first example embodiment.

The sub processing unit 421 may have a same hardware configuration as the processing unit 416.

When the second frequency band radio quality information regarding the three or more second frequency band base stations is stored in the storage unit 426 by the sub processing unit 421, the processing unit 416 derives a position of the communication device 401 from these pieces of the information. The processing unit 416 performs the derivation by the three-point positioning method described in the section of the Background Art.

The processing unit 416 causes the storage unit 426 to store position information representing the derived second frequency band position.

The processing unit 416 may derive a position of the communication device 401 by using the first frequency band radio quality information in combination.

At this occasion, the processing unit 416 tries to acquire, by the first frequency band radio wave received by the main communication unit, the first frequency band radio quality information regarding the three or more first frequency band base stations with respect to the first frequency band radio wave received by the main communication unit 406. At this occasion, when the received electric field strength is included in the radio quality information, the processing unit 416 derives the received electric field strength of the first frequency band radio wave, for example, by a signal level of an electric signal by the main communication unit 406 after reception. When the propagation time is included in the radio quality information, the processing unit 416 derives the propagation time of the first frequency band radio wave by subtracting, from a reception time of the first frequency band radio wave, a transmission time of the first frequency band radio wave.

Then, the processing unit 416 derives the first frequency band position of the communication device 401 by the above-described three-point positioning method from these pieces of the first frequency band radio quality information.

The processing unit 416 causes the storage unit 426 to store position information representing the derived first frequency band position.

Then, the processing unit 416 derives the third position from the first frequency band position and the second frequency band position. The third position is, for example, an intermediate position between the first frequency band position and the second frequency band position. Then, the processing unit 416 sets the third position as a position of the communication device 401.

The processing unit 416 causes the storage unit 426 to store position information representing the derived third position.

The main communication unit 406 performs communication with predetermined equipment connected to the network 801 via the first frequency band base station by the first frequency band radio wave in response to an instruction from the processing unit 416. The equipment includes a positioning device 301.

The sub reception unit 411 receives the second frequency band radio wave from the second frequency band base station. Then, the sub reception unit 411 transmits the reception information to the sub processing unit 421.

The sub processing unit 421 causes the sub reception unit 411 to receive the second frequency band radio wave based on the setting information stored in advance in the storage unit 426, in response to an instruction from the processing unit 416. Then, the sub processing unit 421 tries to acquire the second frequency band radio quality information by the second frequency band radio wave received by the sub reception unit 411. The sub processing unit 421 performs the trial by the reception information received by the sub reception unit 411.

When the second frequency band radio quality information is acquired, the sub processing unit 421 causes the storage unit 426 to store the acquired second frequency band radio quality information.

At this occasion, when the received electric field strength is included in the radio quality information, the sub processing unit 421 derives a received electric field strength of the second frequency band radio wave by a signal level of an electric signal by the sub reception unit 411 after reception. When the propagation time is included in the radio quality information, the sub processing unit 421 derives a propagation time of the second frequency band radio wave by subtracting, from a reception time of the radio wave, a transmission time of the radio wave, which is included in the radio wave.

The storage unit 426 stores in advance a program and information for causing the main communication unit 406, the processing unit 416, the sub reception unit 411, and the sub processing unit 421 to perform the above-described operation. The information includes the setting information. The storage unit 426 further stores information instructed from each of the main communication unit 406, the processing unit 416, the sub reception unit 411, and the sub processing unit 421. The storage unit 426 further reads information instructed from each of the main communication unit 406, the processing unit 416, the sub reception unit 411, and the sub processing unit 421, and transmits the information to a designated one out of the main communication unit 406, the processing unit 416, the sub reception unit 411, and the sub processing unit 421.

### [Processing Flow Example]

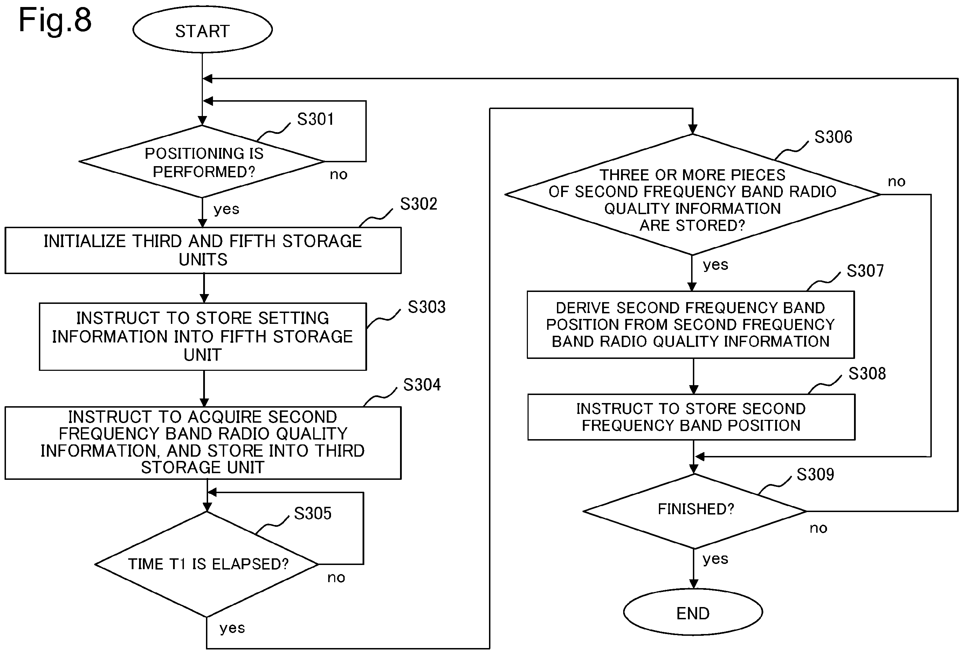

Fig. 8 is a conceptual diagram illustrating a processing flow example of processing to be performed by the processing unit 416 of the communication device 401 illustrated in Fig. 7.

The processing unit 416 performs the processing illustrated in Fig. 8 by an external input of starting information, for example.

Then, as processing of S301, the processing unit 416 determines whether a position of the communication device 401 is derived. The processing unit 416 performs the determination, for example, by determining whether an external input of instruction information is present.

The processing unit 416 performs processing of S302, when a determination result by the processing of S301 is yes.

On the other hand, the processing unit 416 performs the processing of S301 again, when the determination result by the processing of S301 is no.

Then, as the processing of S302, the processing unit 416 performs initialization of making storage contents of third and fifth storage units in the storage unit 426 illustrated in Fig. 7 empty. The third and fifth storage units are each a storage unit represented by an address, for example, and for storing specific information in the storage unit 426.

The third storage unit is a storage unit for storing second frequency band radio quality information acquired by the sub processing unit 421.

On the other hand, the fifth storage unit is a storage unit in which the setting information for causing the sub processing unit 421 to receive the second frequency band radio wave is stored. The sub processing unit 421 receives the second frequency band radio wave by the setting information stored in the fifth storage unit. Therefore, for example, in the following case, the sub processing unit 421 receives the second frequency band radio wave by the setting information stored in the fifth storage unit. The case is a case that the storage unit 426 stores a plurality of types of the setting information, and the processing unit 416 causes the fifth storage unit to store one of the setting information by external input information. A case that the storage unit 426 stores a plurality of types of the setting information is, for example, a case that the storage unit 426 stores the setting information relating to a plurality of frequency bands.

As processing of S303, the processing unit 416 causes the storage unit 426 to store the setting information into the fifth storage unit.

Then, as processing of S304, the processing unit 416 instructs the sub processing unit 421 to acquire the second frequency band radio quality information, and store the acquired second frequency band radio quality information into the third storage unit.

The sub processing unit 421 that has received the instruction causes the sub reception unit 411 to receive the second frequency band radio wave, based on the setting information stored in the fifth storage unit. Then, the sub processing unit 421 tries to acquire the second frequency band radio quality information from the second frequency band radio wave received by the sub reception unit 411. When the second frequency band radio quality information is acquired, the sub processing unit 421 stores the second frequency band radio quality information into the third storage unit. The sub processing unit 421 performs the acquisition and the storing by the number of times equal to the number of the second frequency band base stations that have transmitted the received second frequency band radio wave.

Next, as processing of S305, the processing unit 416 determines whether a time T1 has elapsed since the processing of S304 finished. Herein, it is assumed that the processing unit 416 is in an environment in which a timer is usable. Further, the time T1 is a time that is determined in advance for the processing of S305. The processing of S305 is performed for the purpose of waiting storing of the second frequency band radio quality information into the third storage unit by the sub processing unit 421 by the time T1.

The processing unit 416 performs processing of S306, when a determination result by the processing of S305 is yes.

On the other hand, the processing unit 416 performs the processing of S305 again, when the determination result by the processing of S305 is no.

When the processing of S306 is performed, as the same processing, the processing unit 416 determines whether the second frequency band radio quality information relating to the three or more second frequency band base stations is stored in the third storage unit. Herein, it is assumed that the number of the second frequency band base stations coincides with the number of pieces of the second frequency band radio quality information. Further, it is assumed that the processing unit 416 sequentially monitors the number of pieces of the second frequency band radio quality information stored in the third storage unit.

The processing unit 416 performs processing of S307, when a determination result by the processing of S306 is yes.

On the other hand, the processing unit 416 performs processing of S309, when the determination result by the processing of S306 is no.

When the processing of S307 is performed, as the same processing, the processing unit 416 derives the second frequency band position of the communication device 401 by the second frequency band radio quality information relating to the three or more second frequency band base stations stored in the third storage unit. The processing unit 416 performs the derivation by the three-point positioning method described in the first example embodiment.

Then, as processing of S308, the processing unit 416 causes the storage unit 426 to store position information representing the second frequency band position derived by the processing of S307.

Then, as the processing of S309, the processing unit 416 determines whether the processing illustrated in Fig. 8 is finished. The processing unit 416 performs the determination, for example, by determining whether an external input of finishing information is present.

The processing unit 416 finishes the processing illustrated in Fig. 8, when a determination result by the processing of S309 is yes.

On the other hand, the processing unit 416 performs the processing of S301 again, when the determination result by the processing of S309 is no.

### [Advantageous Effect]

Similarly to the positioning system according to a first system, the positioning system according to the second example embodiment performs derivation of a position of a communication device by a second frequency band radio wave being a radio wave other than a first frequency band radio wave being a radio wave in a frequency band for use in wireless communication by the communication device. Therefore, similarly to the positioning system according to the first example embodiment, the positioning system according to the second example embodiment is able to derive a position of the communication device, even when it is difficult to derive the position of the communication device by the first frequency band radio wave.

In addition to the above, the positioning system according to the second example embodiment performs derivation of the position by the communication device itself being a positioning target. Therefore, the positioning system according to the second example embodiment is able to omit communication to be performed between the communication device and a positioning device. Thus, the positioning system according to the second example embodiment is able to reduce communication load in communication to be performed between the communication device and a positioning device.

### <Third Example Embodiment>

A third example embodiment is an example embodiment relating to a positioning system achievable in terms of long term evolution (LTE) specification. It is assumed that description on each term that starts with a first frequency band or a second frequency band in the description of the third example embodiment, regarding the description described in the first example embodiment, is the same as the description in the first example embodiment. However, when description on these terms is inconsistent between the first example embodiment and the second example embodiment, description in the second example embodiment is preferentially used.

### [Configuration and Operation]

A configuration example of a positioning system according to the third example embodiment is a configuration of the positioning system 501 illustrated in Fig. 1. However, a positioning device illustrated in Fig. 1 is included in a base station being the LTE compliant. A communication device 401 is an LTE terminal or the like.

Description on an operation of the positioning system 501 according to the third example embodiment is made by description on the following processing flow example.

### [Processing Flow Example]

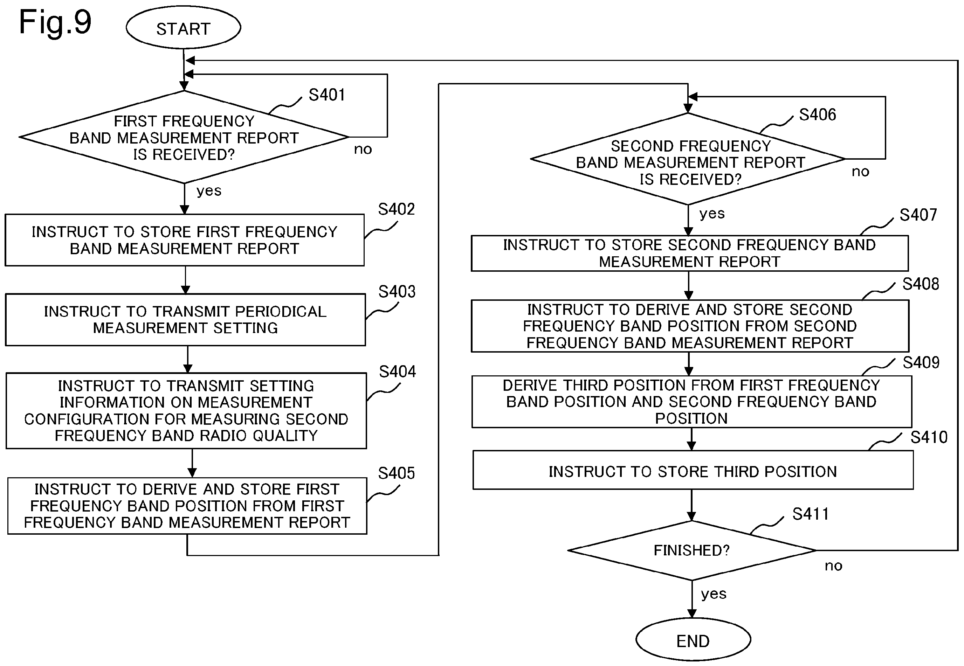

Fig. 9 is a conceptual diagram illustrating a processing flow example of processing to be performed by a processing unit 316 of a positioning device 301 according to the third example embodiment, which is illustrated in Fig. 1.

The processing unit 316 starts the processing illustrated in Fig. 9 by an external input of starting information, for example.

Then, as processing of S401, the processing unit 316 determines whether a first frequency band measurement report (MR) being a MR relating to a first frequency band radio wave is transmitted from the communication device 401. The MR is defined in accordance with the LTE standards, and is well-known.

The processing unit 316 performs processing of S402, when a determination result by the processing of S401 is yes.

On the other hand, the processing unit 316 performs the processing of S401 again, when the determination result by the processing of S401 is no.

When the processing of S402 is performed, as the same processing, the processing unit 316 causes a storage unit 326 to store the first frequency band MR, which is determined, by the processing of S401, to be transmitted.

Then, as processing of S403, the processing unit 316 causes a communication unit 306 to transmit a periodical measurement setting to the communication device 401. The periodical measurement setting is defined in accordance with the LTE standards, and is well-known.

Then, as processing of S404, the processing unit 316 causes the communication unit 306 to transmit, to the communication device 401, setting information on a measurement configuration for measuring second frequency band radio quality. The measurement configuration and the setting information thereof are defined in accordance the LTE standards, and are well-known.

Then, as processing of S405, the processing unit 316 derives the first frequency band position by the first frequency band radio quality information included in the first frequency band MR stored in the storage unit 326 by the processing of S402. Herein, inclusion of the first frequency band radio quality information in the first frequency band MR is well-known.

However, it is not always a case that the first frequency band radio quality information relating to the first frequency band radio wave emitted from the three or more first frequency band base stations is included in the first frequency band MR. When the first frequency band radio quality information relating to the three or more first frequency band base stations is not included in the first frequency band MR, the processing unit 316 does not derive the first frequency band position.

When the first frequency band position is derived, the processing unit 316 causes the storage unit 326 to store position information representing the derived first frequency band position.

Then, as processing of S406, the processing unit 316 determines whether a second frequency band MR is received from the communication device 401.

The processing unit 316 performs processing of S407, when a determination result by the processing of S406 is yes.

On the other hand, the processing unit 316 performs the processing of S407 again, when the determination result by the processing of S406 is no.

When the processing of S407 is performed, as the same processing, the processing unit 316 causes the storage unit 326 to store a second frequency band MR, which is determined, by processing of S406, to be received.

Then, as processing of S408, the processing unit 316 derives the second frequency band position by the second frequency band radio quality information included in the second frequency band MR stored in the storage unit 326 by the processing of S407.

Inclusion of the second frequency band radio quality information in the second frequency band MR is well-known.

However, it is not always the case that the second frequency band radio quality information relating to the second frequency band radio wave emitted from the three or more second frequency band base stations is included in the second frequency band MR. When the second frequency band radio quality information relating to the three or more second frequency band base stations is not included in the second frequency band MR, the processing unit 316 does not derive the second frequency band position.

When the second frequency band position is derived, the processing unit 316 causes the storage unit 326 to store position information representing the derived second frequency band position.

Then, as processing of S409, the processing unit 316 derives the third position by the first frequency band position stored in the storage unit 326 by the processing of S405, and the second frequency band position stored in the storage unit 326 by the processing of S408. Description on the third position is as described in the description on the first example embodiment.

However, when neither the first frequency band position nor the second frequency band position is stored in the storage unit 326, the processing unit 316 does not derive the third position.

When the third position is derived by processing of S410, the processing unit 316 causes the storage unit 326 to store position information representing the derived third position.

Then, as processing of S411, the processing unit 316 determines whether the processing illustrated in Fig. 9 is finished. The processing unit 316 performs the determination, for example, by determining whether an external input of finishing information is present.

The processing unit 316 finishes the processing illustrated in Fig. 9, when a determination result by the processing of S411 is yes.

On the other hand, the processing unit 316 performs the processing of S401 again, when the determination result by the processing of S411 is no.

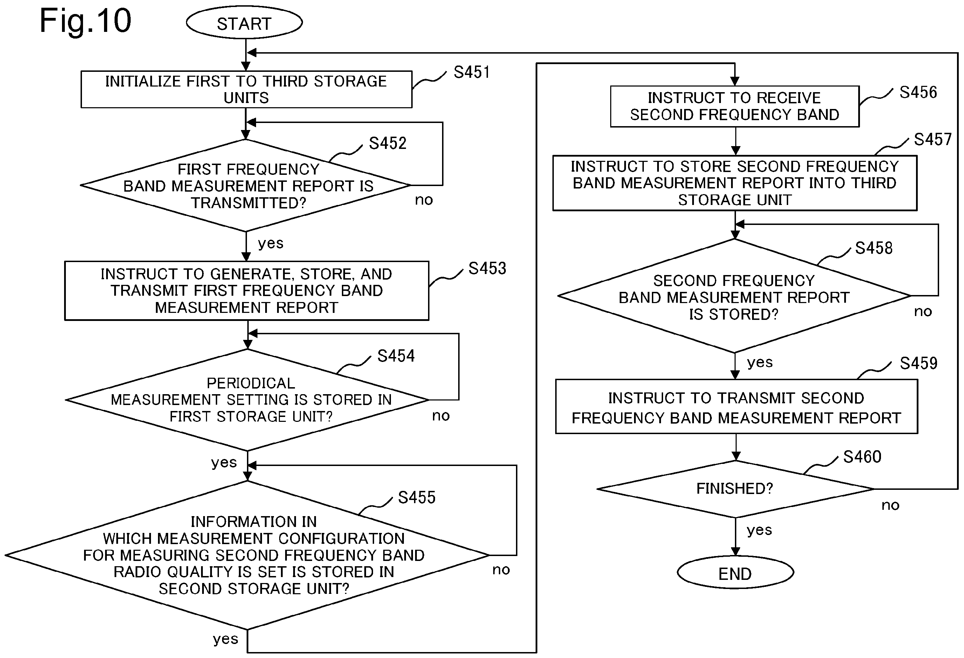

Fig. 10 is a conceptual diagram illustrating a processing flow example of processing to be performed by a processing unit 416 of the communication device 401 according to the third example embodiment, which is illustrated in Fig. 1.

The processing unit 416 starts the processing illustrated in Fig. 10 by an external input of starting information, for example.

Then, as processing of S451, the processing unit 416 performs initialization of making storage contents of first to third storage units in the storage unit 426 illustrated in Fig. 1 empty. Each of the first to third storage units is a storage unit represented by an address, for example, and provided for storing specific information in the storage unit 426.

The first storage unit is a storage unit for storing the above-described periodical measurement setting (see the processing of S403 in Fig. 9), which is transmitted to the communication device 401 by the positioning device 301. The second storage unit is a storage unit for storing information (see the processing of S404 in Fig. 9) for use in setting a measurement configuration for measuring second frequency band radio quality. The third storage unit is a storage unit for storing a second frequency band measurement report generated by a sub processing unit 421.

Next, as processing of S452, the processing unit 416 determines whether a first frequency band measurement report is transmitted to the positioning device 301. The processing unit 416 performs the determination, for example, by determining whether a predetermined timing at which a first frequency band measurement report is transmitted to the positioning device 301 has reached. Herein, it is assumed that the communication device 401 is determined to transmit, to the positioning device 301, a first frequency band measurement report at the above-described timing. Further, it is assumed that the processing unit 416 can use a clock for determining that the above-described timing has reached.

The processing unit 416 performs processing of S453, when a determination result by the processing of S452 is yes.

On the other hand, the processing unit 416 performs the processing of S452 again, when the determination result by the processing of S452 is no.

When processing of S453 is performed, as the same processing, the processing unit 416 generates the first frequency band MR by the first frequency band radio wave received by the communication unit 306. Then, the processing unit 416 causes the storage unit 426 to store the generated first frequency band MR into the fourth storage unit.

Then, as processing of S454, the processing unit 416 determines whether the periodical measurement setting is stored in the first storage unit.

The processing unit 416 performs processing of S455, when a determination result by the processing of S454 is yes.

On the other hand, the processing unit 416 performs the processing of S454 again, when the determination result by the processing of S454 is no.

When the processing of S455 is performed, as the same processing, the processing unit 416 determines whether the first frequency band measurement configuration setting information is stored in the second storage unit.

The processing unit 416 performs processing of S456, when a determination result by the processing of S455 is yes.

On the other hand, the processing unit 416 performs the processing of S455 again, when the determination result by the processing of S455 is no.

When the processing of S456 is performed, as the same processing, the processing unit 416 instructs the sub processing unit 421 illustrated in Fig. 1 to start receiving a second frequency band radio wave, based on the measurement configuration setting information stored in the second storage unit.

The sub processing unit 421 that has received the instruction causes the sub reception unit 411 to start receiving the second frequency band radio wave.

Then, as processing of S457, the processing unit 416 instructs the sub processing unit 421 to generate the above-described second frequency band MR from the received second frequency band radio wave, and store the second frequency band MR into the third storage unit.

The sub processing unit 421 that has received the instruction tries to acquire, from the received second frequency band radio wave, the second frequency band radio quality information. When the second frequency band radio quality information is acquired, the sub processing unit 421 stores the second frequency band radio quality information into the third storage unit. The sub processing unit 421 performs the acquisition and the storing by the number of times equal to the number of the second frequency band base stations that have transmitted the received second frequency band radio wave. Then, the sub processing unit 421 generates the second frequency band MR including the acquired second frequency band radio quality information, and causes the storage unit 426 to store the second frequency band MR into the third storage unit.

Next, as processing of S458, the processing unit 416 determines whether the second frequency band MR is stored in the third storage unit. The processing unit 416 sequentially monitors whether the second frequency band MR is stored in the third storage unit.

The processing unit 316 performs processing of S459, when a determination result by the processing of S458 is yes.

On the other hand, the processing unit 316 performs the processing of S458 again, when the determination result by the processing of S458 is no.

When the processing of S459 is performed, as the same processing, the processing unit 316 causes a main communication unit 406 to transmit, to the positioning device 301, the second frequency band MR stored in the third storage unit.

Then, as processing of S460, the processing unit 416 determines whether the processing illustrated in Fig. 10 is finished. The processing unit 416 performs the determination, for example, by determining whether an external input of finishing information is present.

The processing unit 416 finishes the processing illustrated in Fig. 10, when a determination result by the processing of S460 is yes.

On the other hand, the processing unit 416 performs the processing of S451 again, when the determination result by the processing of S460 is no.

### [Advantageous Effect]

The positioning system according to the third example embodiment provides an advantageous effect similar to the advantageous effect provided by the positioning system according to the first example embodiment, while following a processing operation between a terminal and a base station, which is defined in the LTE.

In the foregoing description, a case is described in which a deriving unit being a portion for deriving and outputting second frequency band position information is included in either of a communication device and a positioning device. The second frequency band position information is information representing a position of the communication device derived from the second frequency band quality information relating to each of the three or more second frequency band communicators. However, an installation position of the deriving unit is optional. For example, a part of the deriving unit may be included in the communication device, and the other part thereof may be located outside the communication device.

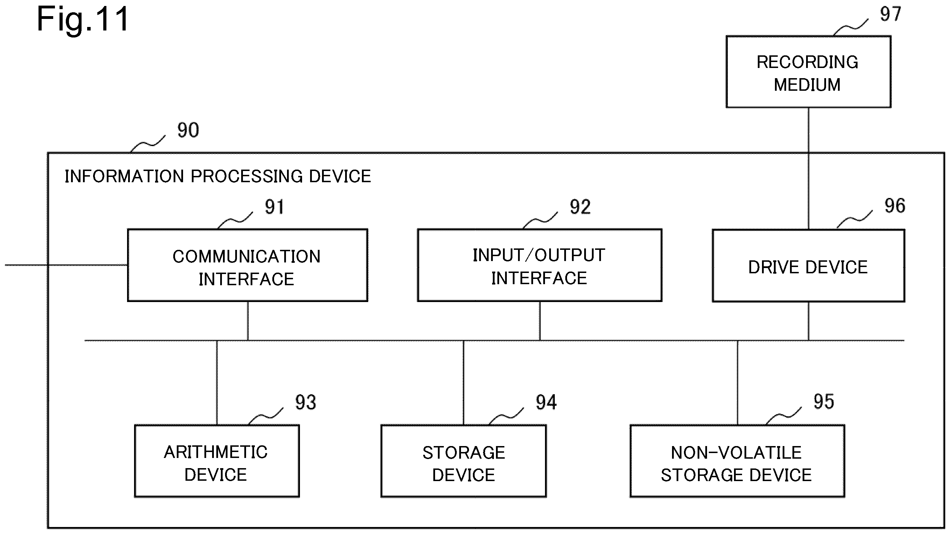

Fig. 11 is a conceptual diagram illustrating a hardware configuration example of an information processing device capable of achieving a positioning device and a communication device according to each of the example embodiments.

An information processing device 90 includes a communication interface 91, an input/output interface 92, an arithmetic device 93, a storage device 94, a non-volatile storage device 95, and a drive device 96.

The communication interface 91 is a communication means with which a communication device according to each of the example embodiments communicates by wired or/and wireless with an external device. When the communication device is achieved by using at least two information processing devices, these devices may be connected to be mutually communicable to each other via the communication interface 91.

The input/output interface 92 is a man-machine interface such as a keyboard being one example of an input device, and a display as an output device.

The arithmetic device 93 is an arithmetic processing device such as a general-purpose central processing unit (CPU) and a microprocessor. The arithmetic device 93 is, for example, able to read various programs stored in the non-volatile storage device 95 to the storage device 94, and execute processing in response to the read program.

The storage device 94 is a memory device being referrable from the arithmetic device 93, such as a random access memory (RAM), and stores a program, various pieces of data, and the like. The storage device 94 may be a volatile memory device.

The non-volatile storage device 95 is, for example, a non-volatile storage device such as a read only memory (ROM) and a flash memory, and is able to store various programs, data, and the like.

The drive device 96 is, for example, a device in which data reading and writing with respect to a recording medium 97 to be described later is processed.

The recording medium 97 is, for example, any recording medium capable of recording data, such as an optical disk, a magneto-optical disk, and a semiconductor flash memory.

Each of the example embodiments according to the present invention may be achieved, for example, by configuring a communication device by the information processing device 90 exemplified in Fig. 11, and supplying, to the communication device, a program capable of achieving functions described in each of the example embodiments.

In this case, it is possible to achieve an example embodiment by causing the arithmetic device 93 to execute a program supplied to the communication device. Further, it is also possible to configure not all the functions of the communication device but a part of the functions thereof by the information processing device 90.

Further, it may be configured in such a way that the program is recorded in the recording medium 97, and the program is stored in the non-volatile storage device 95 as necessary at shipment of the communication device, at an operation stage, or the like. In this case, a method of supplying the program may employ a method for installing the program in the communication device by using an appropriate jig at a production stage before shipment, an operation stage, or the like. A method of supplying the program may employ a general procedure such as a method of downloading the program from outside via a communication line such as the Internet.

Note that each of the above-described example embodiments is a preferred example embodiment according to the present invention, and various modifications are available as far as the modifications do not depart from the gist of the present invention.

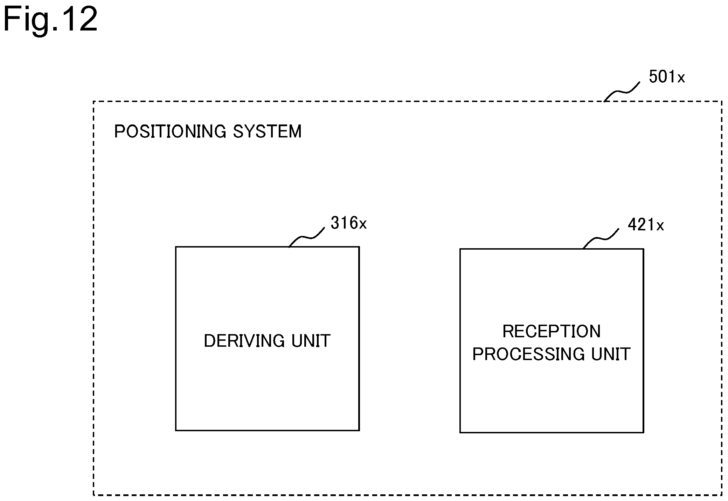

Fig. 12 is a block diagram illustrating a configuration of a positioning system 501x being a minimum configuration of a positioning system according to an example embodiment.

The positioning system 501x includes a reception processing unit 421x and a deriving unit 316x.

The reception processing unit 421x derives second frequency band quality information being information representing quality of a second frequency band radio wave received from a second frequency band communicator for emitting the second frequency band radio wave. The second frequency band radio wave is a radio wave in a second frequency band being a frequency band that does not overlap a first frequency band allocated to an unillustrated communication device for wireless communication.

The deriving unit 316x derives and outputs second frequency band position information being information representing a position of the communication device derived from the second frequency band quality information relating to each of the three or more second frequency band communicators.

The reception processing unit 421x is located inside the communication device, and a position of the deriving unit 316x is optional.

The positioning system 501x derives the position by the second frequency band radio wave, which is not the first frequency band radio wave for use in wireless communication by the communication device.

Therefore, even when it is difficult to derive the position by the first frequency band radio wave, the positioning system 501x is able to derive the position by the second frequency band radio wave.

Specifically, the positioning system 501x is able to derive a position of a communication device, even when it is difficult to use a GPS, and derive the position of the communication device by a radio wave in an allocated frequency band.

Therefore, the positioning system 501x provides an advantageous effect described in the section of [Advantageous Effects of Invention] by the above-described configuration.

Note that the positioning system 501x illustrated in Fig. 12 is, for example, the positioning system 501 illustrated in Fig. 1 or Fig. 7. The communication device is, for example, the communication device 401 illustrated in Fig. 1 or Fig. 7. The reception processing unit 421x is, for example, combination of the sub reception unit 411 and the sub processing unit 421 illustrated in Fig. 1 or Fig. 7. The deriving unit 316x is a portion for performing the derivation out of the processing unit 316 illustrated in Fig. 1 or the processing unit 416 illustrated in Fig. 7. The second frequency band communicator is, for example, the above-described second frequency band base station. The second frequency band quality information is, for example, the above-described second frequency band radio quality information.

In the foregoing, each of the example embodiments according to the present invention has been described. However, the present invention is not limited to the above-described example embodiments, and it is possible to add further modifications, replacements, and adjustments within the basic technical scope of the present invention. For example, a configuration of an element illustrated in each drawing is one example for aiding comprehension of the present invention, and the present invention is not limited to the configurations illustrated in these drawings.

The whole or part of the example embodiments disclosed above can be described as, but not limited to, the following supplementary notes.

### (Supplementary Note 1)

A positioning system including:
a reception processing unit that derives second frequency band quality information being information representing quality of a second frequency band radio wave that is a radio wave in a second frequency band being a frequency band that does not overlap a first frequency band allocated to wireless communication to be performed by a communication device, and is received from a second frequency band communicator for transmitting the second frequency band radio wave; and
a deriving unit that derives and outputs second frequency band position information being information representing a position of the communication device being derived from the second frequency band quality information relating to each of three or more of the second frequency band communicators, wherein
at least a position of the reception processing unit out of the reception processing unit and the deriving unit lies within the communication device.

### (Supplementary Note 2)

The positioning system according to supplementary note 1, wherein
the second frequency band quality information is information, in the communication device, representing at least either one of a received electric field strength of the second frequency band radio wave and a propagation time of the second frequency band radio wave between the second frequency band communicator and the communication device.

### (Supplementary Note 3)

The positioning system according to supplementary note 1 or 2, wherein
the second frequency band position information is derived by a three-point positioning method.

### (Supplementary Note 4)

The positioning system according to any one of supplementary notes 1 to 3, wherein
transmission by the second frequency band radio wave is not performed.

### (Supplementary Note 5)

The positioning system according to any one of supplementary notes 1 to 4, wherein
the communication device includes a communication processing unit that performs communication with predetermined equipment communicably connected via a first frequency band communicator that transmits a first frequency band radio wave being a radio wave in the first frequency band.

### (Supplementary Note 6)

The positioning system according to supplementary note 5, wherein
the communication processing unit derives first frequency band quality information being information representing quality of the first frequency band radio wave received from the first frequency band communicator, and derives and outputs first frequency band position information being information representing a position of the reception processing unit being derived from the first frequency band quality information relating to each of the three or more first frequency band communicators.

### (Supplementary Note 7)

The positioning system according to supplementary note 6, wherein
the first frequency band position information is derived by a three-point positioning method.

### (Supplementary Note 8)

The positioning system according to supplementary note 6 or 7, wherein
third position information being information representing a position of the reception processing unit derived from the first frequency band position information and the second frequency band position information is derived and output.

### (Supplementary Note 9)

The positioning system according to any one of supplementary notes 1 to 8, wherein
the communication device includes the reception processing unit, and the deriving unit is outside of the communication device.

### (Supplementary Note 10)

The positioning system according to any one of supplementary notes 1 to 9, wherein
the reception processing unit is installed inside one housing, and the deriving unit is installed outside the housing.

### (Supplementary Note 11)

The positioning system according to any one of supplementary notes 1 to 8, wherein
the communication device includes the reception processing unit and the deriving unit.

### (Supplementary Note 12)

The positioning system according to any one of supplementary notes 1 to 8, and 11, wherein
both of the reception processing unit and the deriving unit are installed in one housing.

### (Supplementary Note 13)

The positioning system according to any one of supplementary notes 1 to 8, 11, and 12, wherein
the communication device is a communication terminal.

### (Supplementary Note 14)

The positioning system according to supplementary note 13, wherein
the communication terminal is a mobile terminal.

### (Supplementary Note 15)

A positioning method including:
deriving second frequency band quality information being information representing quality of a second frequency band radio wave that is a radio wave in a second frequency band being a frequency band that does not overlap a first frequency band allocated to a communication device for wireless communication, and is received from a second frequency band communicator for transmitting the second frequency band radio wave; and
deriving and outputting second frequency band position information being information representing a position of the communication device being derived from the second frequency band quality information relating to each of three or more of the second frequency band communicators.

### (Supplementary Note 16)

A positioning program causing a computer to execute:
processing of deriving second frequency band quality information being information representing quality of a second frequency band radio wave that is a radio wave in a second frequency band being a frequency band that does not overlap a first frequency band allocated to a communication device for wireless communication, and is received from a second frequency band communicator for transmitting the second frequency band radio wave; and
processing of deriving and outputting second frequency band position information being information representing a position of the communication device being derived from the second frequency band quality information relating to each of three or more of the second frequency band communicators.

While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2018-160680, filed on August 29, 2018, the disclosure of which is incorporated herein in its entirety by reference.

### [Reference signs List]

90 Information processing device
91 Communication interface
92 Input/output interface
93 Arithmetic device
94 Storage device
95 Non-volatile storage device
96 Drive device
97 Recording medium
301 Positioning device
306 Communication unit
316, 416 Processing unit
316x Deriving unit
326, 426 Storage unit
401 Communication device
406 Main communication unit
411 Sub reception unit
421 Sub processing unit
421x Reception processing unit
501, 501x Positioning system
801 Network
A1, A2, A3 First frequency band base station
B1, B2, B3, B4, B5, B6, B7, B8, B9, B10, B11 Second frequency band
base station

## Claims

1. A positioning system comprising:
a reception processing unit that derives second frequency band quality information being information representing quality of a second frequency band radio wave that is a radio wave in a second frequency band being a frequency band that does not overlap a first frequency band allocated to wireless communication to be performed by a communication device, and is received from a second frequency band communicator for transmitting the second frequency band radio wave; and
a deriving unit that derives and outputs second frequency band position information being information representing a position of the communication device being derived from the second frequency band quality information relating to each of three or more of the second frequency band communicators, wherein
at least a position of the reception processing unit out of the reception processing unit and the deriving unit lies within the communication device.

2. The positioning system according to claim 1, wherein
the second frequency band quality information is information, in the communication device, representing at least either one of a received electric field strength of the second frequency band radio wave and a propagation time of the second frequency band radio wave between the second frequency band communicator and the communication device.

3. The positioning system according to claim 1 or 2, wherein
the second frequency band position information is derived by a three-point positioning method.

4. The positioning system according to any one of claims 1 to 3, wherein
transmission by the second frequency band radio wave is not performed.

5. The positioning system according to any one of claims 1 to 4, wherein
the communication device includes a communication processing unit that performs communication with predetermined equipment communicably connected via a first frequency band communicator that transmits a first frequency band radio wave being a radio wave in the first frequency band.

6. The positioning system according to claim 5, wherein
the communication processing unit derives first frequency band quality information being information representing quality of the first frequency band radio wave received from the first frequency band communicator, and derives and outputs first frequency band position information being information representing a position of the reception processing unit being derived from the first frequency band quality information relating to each of the three or more first frequency band communicators.

7. The positioning system according to claim 6, wherein
the first frequency band position information is derived by a three-point positioning method.

8. The positioning system according to claim 6 or 7, wherein
third position information being information representing a position of the reception processing unit being derived from the first frequency band position information and the second frequency band position information is derived and output.

9. The positioning system according to any one of claims 1 to 8, wherein
the communication device includes the reception processing unit, and the deriving unit is outside of the communication device.

10. The positioning system according to any one of claims 1 to 9, wherein
the reception processing unit is installed inside one housing, and the deriving unit is installed outside the housing.

11. The positioning system according to any one of claims 1 to 8, wherein
the communication device includes the reception processing unit and the deriving unit.

12. The positioning system according to any one of claims 1 to 8, and 11, wherein
both of the reception processing unit and the deriving unit are installed in one housing.

13. The positioning system according to any one of claims 1 to 8, 11, and 12, wherein
the communication device is a communication terminal.

14. The positioning system according to claim 13, wherein
the communication terminal is a mobile terminal.

15. A positioning method comprising:
deriving second frequency band quality information being information representing quality of a second frequency band radio wave that is a radio wave in a second frequency band being a frequency band that does not overlap a first frequency band allocated to a communication device for wireless communication, and is received from a second frequency band communicator for transmitting the second frequency band radio wave; and
deriving and outputting second frequency band position information being information representing a position of the communication device being derived from the second frequency band quality information relating to each of three or more of the second frequency band communicators.

16. A recording medium recording a positioning program causing a computer to execute:
processing of deriving second frequency band quality information being information representing quality of a second frequency band radio wave that is a radio wave in a second frequency band being a frequency band that does not overlap a first frequency band allocated to a communication device for wireless communication, and is received from a second frequency band communicator for transmitting the second frequency band radio wave; and
processing of deriving and outputting second frequency band position information being information representing a position of the communication device being derived from the second frequency band quality information relating to each of three or more of the second frequency band communicators.
